# DEMANDE DE BREVET EUROPEEN

(11) **EP 1 611 965 A1**
(43) Date de publication de la demande: **04.01.2006**
(21) Numéro de dépôt: 05356093.4
(22) Date de dépôt: 24.05.2005
(51) Int. Cl.: B07C 5/12

(54) **Dispositif d'inspection pour des récipients, à déplacement par friction**

(30) Priorité: 02.07.2004 FR 0407345
(71) Demandeur: Tiama, 69700 Montagny (FR)
(72) Inventeur: Leroux, Pascal, 69420 Treves (FR); Pitaval, Dominique, 42320 Saint-Christo en Jarez (FR); Miranda de Azevedo, Laurent, 69002 Lyon (FR)
(74) Mandataire: Thibault, Jean-Marc

(57) **Abrégé**

L'invention concerne un dispositif d'inspection pour des récipients (2), comportant une tête d'inspection (3) pour les récipients, menée en déplacement vertical alternatif par l'intermédiaire d'un organe menant.

Selon l'invention, la tête d'inspection (3) présente au moins une tige menée (4) entraînée directement par friction en déplacement vertical alternatif par l'organe menant (5).

## Description

La présente invention concerne le domaine technique de l'inspection d'objets creux ou récipients au sens général, à caractère transparent ou translucide, tels que par exemple des bouteilles, des pots ou des flacons en verre en vue de déceler d'éventuels défauts dimensionnels ou de surface présentés par un tel récipient.

Dans le domaine technique de l'inspection de récipients notamment en verre, il est prévu après leur fabrication, de réaliser différents contrôles notamment de la bague du récipient (diamètres interne/externe, étanchéité, hauteur) et du col du récipient (diamètre intérieur, profil intérieur, brochage).

Afin de réaliser de telles inspections, il est connu d'utiliser un ou plusieurs dispositifs comportant chacun une tête d'inspection destinée à être abaissée soit sur une distance précise en fonction de la nature du récipient, soit pour venir en contact avec le récipient, soit pour maintenir en appui la tête d'inspection sur le récipient le temps de l'inspection. De manière classique, une telle inspection est réalisée à l'aide d'une machine présentant soit un convoyeur linéaire adapté pour maintenir les récipients dans des positions précises, soit un convoyeur à étoiles, avec un mouvement circulaire indexé pour placer les récipients en relation avec différents postes de contrôle. Chaque tête d'inspection est déplacée selon un mouvement vertical alternatif pour un convoyeur à étoiles tandis que pour un convoyeur linéaire, la tête d'inspection présente de façon supplémentaire, un déplacement horizontal.

Le brevet FR 2 818 748 décrit un dispositif d'inspection comportant une tête montée sur une glissière horizontale qui est fixée sur un chariot déplacé selon des mouvements alternatifs verticaux par une courroie montée entre une poulie folle et une poulie menée par un servomoteur. L'un des inconvénients d'un tel dispositif est la masse déplacée relativement importante, ce qui limite la vitesse et l'accélération de déplacement de la tête d'inspection. Il s'ensuit que la cadence d'inspection des récipients est limitée, ce qui représente un inconvénient majeur dans le processus de production en ligne de récipients. Un autre inconvénient d'un tel dispositif connu apparaît lorsque la tête d'inspection est destinée à venir en contact avec le récipient. En effet, la course de la tête d'inspection n'est pas définie à cause de la dispersion de hauteur des récipients et des défauts qui influent sur cette course comme ceux ne permettant pas à la tête d'inspection de descendre lors d'une opération de brochage. Aussi, compte tenu de l'indétermination de cette course et de la masse embarquée, il peut survenir un choc important entre la tête d'inspection et le récipient, ce qui est susceptible d'entraîner la détérioration du récipient et/ou de la tête d'inspection.

L'objet de la présente invention vise à remédier aux inconvénients énoncés ci-dessus en proposant un dispositif permettant d'inspecter à haute cadence notamment la bague et/ou le col de récipients sans risquer une détérioration des récipients et/ou de la tête d'inspection.

Pour atteindre un tel objectif, l'objet de l'invention concerne un dispositif d'inspection pour des récipients, comportant une tête d'inspection pour les récipients, menée en déplacement vertical alternatif par l'intermédiaire d'un organe menant.

Selon l'invention, la tête d'inspection menée présente au moins une tige menée entraînée directement par friction par l'organe menant pour augmenter la cadence d'inspection des récipients.

L'entraînement direct par friction par l'organe menant permet de limiter l'inertie et les masses embarquées et de récupérer, sans jeu, la force motrice sur la tige menée, ce qui permet d'augmenter les capacités dynamiques de la tête d'inspection en termes notamment de vitesse et d'accélération. Par ailleurs, l'entraînement par friction offre l'avantage d'autoriser un débrayage par glissement en cas de conflit mécanique c'est-à-dire de contact entre la tête d'inspection et le récipient.

Afin d'apporter une solution au phénomène d'usure engendré par l'entraînement par friction notamment lors du glissement, l'objet de l'invention vise à proposer également un exemple préféré de réalisation pour lequel la tige menée est équipée d'un système de compensation-amortissement interposé entre la tête d'inspection et la tige menée. Un tel système de compensation-amortissement permet de limiter, voire d'annuler, le glissement entre l'organe menant et la tige menée lorsque la tête d'inspection vient au contact avec le récipient, tout en limitant le choc entre la tête d'inspection et le récipient.

Avantageusement, le système de compensation-amortissement comporte un ressort monté dans un corps relié à la tête d'inspection, le ressort étant sollicité par la tige menée.

Selon le type d'inspection, le système de compensation-amortissement comporte avantageusement un capteur de détection du déplacement relatif entre la tige menée et la tête d'inspection afin de détecter le contact entre la tête d'inspection et le récipient.

Avantageusement, l'organe menant est constitué par une roue en friction sur la tige menée, ladite roue étant entraînée en rotation par un organe moteur.

De préférence, la tige menée est maintenue en contact par friction sur la roue à l'aide d'au moins un galet presseur.

Un autre objet de l'invention est de proposer une machine d'inspection caractérisée en ce qu'elle comprend au moins un dispositif d'inspection conforme à l'invention, monté sur des moyens de déplacement en translation horizontale.

Diverses autres caractéristiques ressortent de la description faite ci-dessous en référence aux dessins annexés qui montrent, à titre d'exemples non limitatifs, des formes de réalisation de l'objet de l'invention.

La **Figure 1** est une vue en élévation d'un premier exemple de réalisation d'un dispositif d'inspection conforme à l'invention.

La **Figure 2** illustre une deuxième variante de réalisation d'un dispositif d'inspection conforme à l'invention.

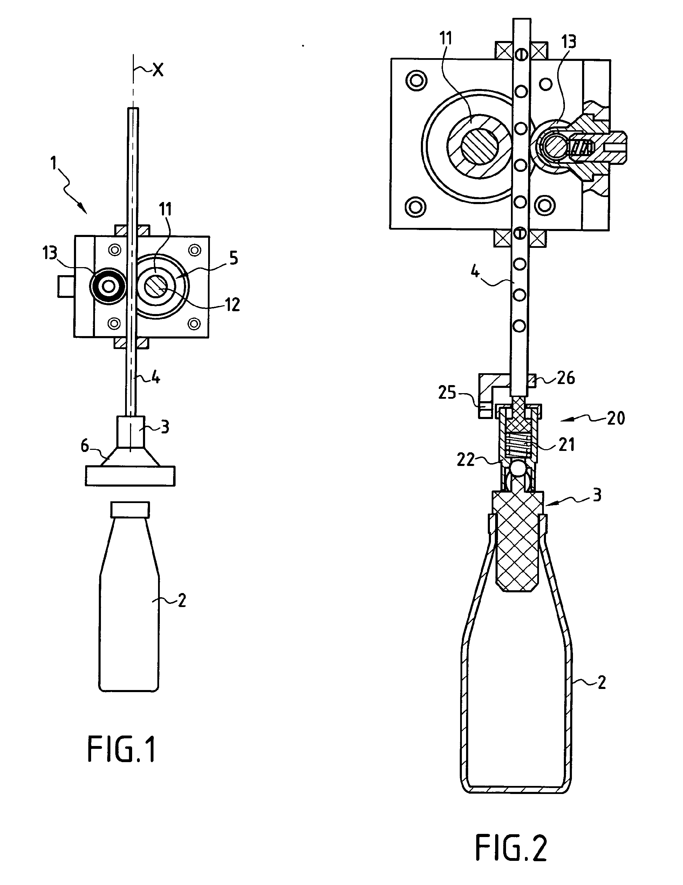

Dans l'exemple illustré plus particulièrement à la **fig. 1,** l'objet de l'invention concerne un dispositif **1** adapté pour inspecter, à haute cadence, des récipients **2** de toute nature tels que par exemple des récipients en verre, afin de permettre la mise en oeuvre de divers contrôle de la bague et/ou col du récipient. Le dispositif **1** comporte une tête d'inspection **3** adaptée à la nature des caractéristiques du récipient à contrôler. Dans l'exemple illustré à la **fig. 1,** la tête d'inspection **3** est plus particulièrement adaptée pour effectuer un contrôle sur la bague du récipient **2.** Chaque récipient **2** est amené successivement par des moyens de convoyage non représentés du type linéaire ou rotatif, dans l'alignement de la tête d'inspection **3.**

De manière classique, la tête d'inspection **3** constitue un organe mené en déplacement vertical alternatif selon une direction **X** de manière, dans un premier temps, à être abaissé pour venir à proximité ou en contact avec le récipient pour ensuite être dégagé au terme de l'opération d'inspection. La tête d'inspection peut être montée sur des moyens de déplacement en translation horizontale. La tête d'inspection **3** fait partie bien entendu d'un poste d'inspection ou d'une machine non représentée mais connue en soi. A cet égard, la machine d'inspection peut être équipée de différents dispositifs d'inspection adaptés chacun au contrôle à réaliser.

Conformément à l'invention, la tête d'inspection **3** présente au moins une tige menée **4** entraînée directement par friction en déplacement vertical alternatif selon la direction **X,** par un organe menant **5** de sorte qu'il existe une possibilité de glissement entre la tige menée **4** et l'organe menant **5.** Tel que cela ressort de l'exemple illustré à la fig. **1,** la tête d'inspection **3** se présente ainsi sous la forme d'une tige menée **4** pourvue, à son extrémité libre, d'un corps **6** intégrant les divers éléments nécessaires à l'inspection du récipient. L'entraînement direct de la tige menée **4** par l'organe menant **5** permet de limiter les masses déplacées, ce qui permet d'atteindre les valeurs de vitesse et d'accélération de la tête d'inspection nécessaires à la haute cadence, et même d'optimiser et de différencier les vitesses des courses de descente et de remontée de la tête d'inspection **3** en diminuant la vitesse de descente et en augmentant la vitesse de remontée. Il s'avère ainsi possible de limiter à haute cadence, le choc entre la tête d'inspection et le récipient, ce choc étant limité par la possibilité de glissement offert par l'entraînement direct par friction.

Tel que cela ressort de la fig. **1,** la tige menée **4** est entraînée par friction directement par l'organe menant 5 entraîné en rotation. Dans l'exemple illustré, l'organe menant **5** est constitué par une roue **11** en friction sur la tige menée **4.** Cette roue à friction **11** est entraînée en rotation par un organe moteur **12** de tout type connu en soi. Selon une caractéristique préférée de réalisation, la tige menée **4** est maintenue en contact avec la roue **11** à l'aide d'au moins un galet presseur **13** situé de préférence en vis-à-vis de la roue **11.** La mise en oeuvre d'une tige mobile **4** sur laquelle agit une roue en friction **11** permet de réduire la masse déplacée. Une telle solution offre comme avantage supplémentaire, de disposer d'une tige menée **4** qui est de conception indépendante de l'organe menant **5.**

Selon une variante de réalisation, le galet presseur **13** est monté réglable en pression sur la tige menée **4** pour permettre de régler la pression de contact de la roue **11** sur la tige menée **4** et par suite, de compenser le phénomène d'usure de cet entraînement par friction.

Selon une caractéristique avantageuse de réalisation, la tige menée **4** est équipée d'une pièce d'usure, de préférence à caractère amovible, sur laquelle agit directement, par friction, l'organe menant **5**. La tige menée **4** peut ainsi être réalisée en un matériau différent du matériau constitutif de la pièce d'usure en contact avec la roue **11**. Ainsi, la tige menée **4** peut être réalisée en un matériau léger, tel qu'en aluminium, matière plastique ou composite, tandis que la pièce d'usure est réalisée en un matériau adapté pour un entraînement par friction, tel qu'en acier traité par exemple. Cette variante de réalisation permet de réduire le poids de la tige menée **4**, tout en limitant la maintenance au changement de la pièce d'usure.

La **fig. 2** illustre une variante de réalisation dans laquelle la tige menée **4** est équipée d'un système de compensation-amortissement **20** situé entre la tête d'inspection **3** et la tige menée **4**. Il est à noter que selon cet exemple, la tête d'inspection **3** est plus particulièrement adaptée pour assurer une opération de brochage, mais il est clair qu'un tel système d'amortissement peut être mis en oeuvre avec tout type de tête d'inspection **3**, tel que le contrôle de bague par exemple.

Dans l'exemple préféré de réalisation illustré, le système de compensation-amortissement **20** comporte un ressort **21** monté dans un corps **22** relié à la tête d'inspection **3**. Le ressort **21** est sollicité en compression par la tige menée **4**. Bien entendu, il peut être prévu de mettre en oeuvre un système de compensation-amortissement **20** différent du type à ressort, tel qu'à gaz par exemple.

Il doit être considéré que le système de compensation-amortissement **20** est un système déformable élastiquement permettant à la tige menée **4** d'effectuer sa course utile, quelle que soient la position de contact entre le récipient et la tête d'inspection, tout en évitant le phénomène de glissement et par suite d'usure, au niveau de l'entraînement par friction. Un tel système **20** permet ainsi de compenser la course de la tige menée **4** en évitant le glissement. Par ailleurs, le système de compensation-amortissement **20** permet d'amortir le choc entre la tête d'inspection et le récipient en absorbant l'énergie de la tige menée 4.

Selon une réalisation préférée, le système de compensation-amortissement **20** comporte un capteur de détection **25** adapté pour déceler un contact entre la tête d'inspection **3** et le récipient **2**. Par exemple, le capteur **25**, qui peut être de tout type, est monté sur un support **26** fixé à la tige menée **4**, de manière à détecter le mouvement relatif entre la tête d'inspection **3** et la tige menée **4**. Le capteur **25** est ainsi à même de donner, à l'organe moteur **12**, un ordre d'arrêt de la course de descente de la tête d'inspection **3**. Il apparaît ainsi possible de compenser la course de la tige menée **4** qui se réduit à la course nécessaire à son arrêt. Cette détection du contact est en particulier avantageuse lorsque la compensation de la course de la tête d'inspection **3** présente une valeur importante (par exemple de l'ordre de 120 mm) afin de tenir compte des défauts lors de la mise en oeuvre d'une opération d'inspection du type brochage. En effet, lors de cette inspection, la tête d'inspection **3** peut être arrêtée dans sa course de descente à cause d'un défaut, à une distance de l'ordre de 120 mm, par rapport à la position souhaitée d'inspection. Il s'ensuit une réduction de la masse du système **20** permettant ainsi d'augmenter les capacités dynamiques de la tête d'inspection.

Le fonctionnement du système de compensation-amortissement **20** découle directement de la description qui précède. Lorsque la tête d'inspection **3** est en contact ou en appui sur le récipient **2**, la poursuite de la descente de la tige menée **4** conduit à la compression du ressort **21** et au déplacement relatif entre le corps **22** et la tige menée **4**. Un tel déplacement relatif est détecté par le capteur **25**. Par exemple, le capteur **25** commande l'organe moteur **12**, immédiatement ou avec un retard donné, dans le sens inverse de déplacement, à savoir de remontée.

Il doit être compris que le système de compensation-amortissement **20** permet d'éviter le glissement entre la tige menée **4** et la route à friction **11** lors du contact de la tête d'inspection **3** sur le récipient **2**, ce qui permet de réduire l'usure de l'entraînement par friction. Par ailleurs, le système de compensation-amortissement **20** limite le choc lors du contact entre la tête d'inspection **3** et le récipient **2**. De plus, le ressort **21** participe au freinage et à la ré accélération de la tige menée **4** lors de l'inversion de son sens de déplacement.

L'invention n'est pas limitée aux exemples décrits et représentés car diverses modifications peuvent y être apportées sans sortir de son cadre.

## Revendications

1. Dispositif d'inspection pour des récipients (**2**), comportant une tête d'inspection (**3**) pour les récipients, menée en déplacement vertical alternatif par l'intermédiaire d'un organe menant (**5**), **caractérisé en ce que** la tête d'inspection (**3**) présente au moins une tige menée (**4**) entraînée directement par friction par l'organe menant (**5**) pour augmenter la cadence d'inspection des récipients (**2**).

2. Dispositif d'inspection selon la revendication 1, **caractérisé en ce que** la tige menée (**4**) est équipée d'un système de compensation-amortissement (**20**) interposé entre la tête d'inspection (**3**) et la tige menée (**4**).

3. Dispositif d'inspection selon la revendication 2, **caractérisé en ce que** le système de compensation-amortissement (**20**) comporte un ressort (**21**) monté dans un corps (**22**) relié à la tête d'inspection (**3**), le ressort étant sollicité par la tige menée (**4**).

4. Dispositif d'inspection selon la revendication 2 ou 3, **caractérisé en ce que** le système de compensation-amortissement (**20**) comporte un capteur de détection (**25**) du déplacement relatif entre la tige menée (**4**) et la tête d'inspection (**3**) afin de détecter le contact entre la tête d'inspection (**3**) et le récipient (**2**).

5. Dispositif d'inspection selon la revendication 1, **caractérisé en ce que** l'organe menant (**5**) est constitué par une roue (**11**) en friction sur la tige menée (**4**), ladite roue (**11**) étant entraînée en rotation par un organe moteur (**12**).

6. Dispositif d'inspection selon la revendication 5, **caractérisé en ce que** la tige menée (**4**) est maintenue en contact par friction sur la roue (**11**) à l'aide d'au moins un galet presseur (**13**).

7. Dispositif d'inspection selon la revendication 6, **caractérisé en ce que** le galet presseur (**13**) est monté réglable en pression sur la tige menée (**4**).

8. Dispositif d'inspection selon la revendication 1 ou 5, **caractérisé en ce que** la tige menée (**4**) est équipée d'une pièce d'usure amovible sur laquelle agit, directement par friction, l'organe menant (**5**).

9. Machine d'inspection **caractérisée en ce qu'**elle comprend au moins un dispositif d'inspection (**1**) conforme à l'une des revendications 1 à 8, monté sur des moyens de déplacement en translation horizontale.
